# EUROPÄISCHE PATENTSCHRIFT

(11) **EP 1 487 088 B1**
(45) Veröffentlichungstag und Bekanntmachung des Hinweises auf die Patenterteilung: **20.08.2008**
(21) Anmeldenummer: 04013134.4
(22) Anmeldetag: 03.06.2004
(51) Int. Cl.: H02K 5/24, H02K 1/18

(54) **Elektromotorischer Antrieb, insbesondere für eine Pumpe für eine elektrohydraulische Fahrzeuglenkvorrichtung**
Electromotive drive, especially for the pump of an electro-hydraulic steering system of a vehicle
Commande electromotrice, notamment pour la pompe du système de direction assisté d'une automobile

(30) Priorität: 10.06.2003 DE 10326074
(43) Veröffentlichungstag der Anmeldung: 15.12.2004
(73) Patentinhaber: TRW Automotive Electronics & Components GmbH, 78315 Radolfzell (DE)
(72) Erfinder: Klingenberg, Hartmut, 78315 Radolfzell (DE); Wilkendorf, Hardy, 88696 Owingen (DE); Ott, Frank, 78239 Rielasingen (DE)
(74) Vertreter: Sties, Jochen

(56) Entgegenhaltungen:
- WO-A-00/36730
- DE-C1- 4 240 045
- US-A- 1 688 891
- US-A- 4 647 803
- US-A- 5 483 113
- US-A- 5 705 866
- US-A- 5 982 061

## Beschreibung

Die Erfindung betrifft einen elektromotorischen Antrieb, insbesondere für eine Pumpe für eine elektrohydraulische Fahrzeuglenkvorrichtung.

Bei elektrohydraulischen Fahrzeuglenkvorrichtungen werden in der Regel elektromotorisch angetriebene Pumpen verwendet, wobei diese Antriebe für einen kurzzeitigen Betrieb bei Vollast ausgelegt sind. Bekannte Motoren für elektrohydraulische Lenkvorrichtungen erzeugen im Vollastbetrieb störende Geräusche, die sich im wesentlichen auf hochfrequente Schwankungen des am Antrieb auftretenden Drehmoments zurückführen lassen.

Elektromotoren bekannter elektromotorischer Antriebe bzw. Pumpen weisen einen Stator und einen als Außenläufer realisierten Rotor auf, welcher den Stator topfförmig umfaßt. Der Stator sitzt auf einem zylindrischen Zapfen auf, der von einer Motorhalterung ausgebildet ist und von dem er durchgriffen wird. Dieser zylindrische Zapfen ist häufig als hohlzylindrischer Lagerschaft ausgebildet. Der Lagerschaft dient zur Aufnahme und drehbaren Lagerung einer Antriebswelle des elektromotorischen Antriebs. Die Antriebswelle ist wiederum mit dem Rotor in geeigneter Weise verbunden. Der Antrieb ist zum Schutz in der Regel von einem Antriebsgehäuse umgeben, das mit der Motorhalterung verbunden ist.

Häufig ist zur Übertragung des Drehmoments vom Stator auf die als Lagerschaft ausgebildete Motorhalterung zwischen Stator und Motorhalterung ein axialer Splint in einander gegenüberstehenden Nuten in der Innenwandung des Stators und der Außenwandung des zylindrischen Zapfens der Motorhalterung eingesetzt, oder es ist ein Spiralspannstift in dem Bereich vorgesehen. Zusätzlich muß dann zur axialen Sicherung ein weiteres Halteelement verwendet werden. Durch die Verwendung eines axialen Splints oder eines Spiralspannstifts zur Drehmomentübertragung wird aufgrund unvermeidbarer Toleranzen in der Bauteilfertigung eine geringfügig exzentrische Lagerung des Stators hervorgerufen, was aufgrund von im Betrieb auftretenden Schwingungen des Systems Stator/Motorhalterung zu einer störenden Erhöhung der Laufgeräusche des elektromotorischen Antriebs führt.

Aus der EP 1 135 841 B1 ist ein elektromotorischer Antrieb bekannt, der eine verbesserte Unterdrückung der bei bekannten Antrieben auftretenden Störgeräusche gewährleistet, indem eine starre Kopplung zwischen dem Stator und einer als Lagerschaft ausgebildeten Motorhalterung weitestgehend aufgehoben wird. Die Drehmomentübertragung erfolgt bei diesem elektromotorischen Antrieb im wesentlichen durch eine Kopplung des Stators mit dem Antriebsgehäuse, wobei der den Stator durchgreifende Lagerschaft zur Halterung des Stators nur in der zur Achse des Lagerschafts transversalen Ebene dient. Die eigentliche Drehmomentübertragung findet durch eine Verbindung des Stators mit einer im Gehäuse befestigten Trägerplatte statt. Diese Trägerplatte muß zur Vermeidung einer mechanischen Überlastung entsprechend dimensioniert sein. Ebenso muß die Verbindung, die beispielsweise über die Kontaktanschlüsse der Antriebswicklungen des Stators realisiert werden kann, beständig und fest genug ausgebildet sein. Zwischen der Innenwandung des Stators und der Außenwandung des Lagerschafts ist ein Spalt vorgesehen, wobei der Spalt vorzugsweise zumindest teilweise mit einem viskosen Medium gefüllt ist. Zusätzlich wird die Einbringung flexibler Elemente wie O-Ringe in den Spalt vorgeschlagen. Auf diese Weise wird eine reduzierte Kopplung von Stator und Lagerschaft erreicht, durch die keine wesentliche Drehmomentübertragung möglich ist, die sich allerdings günstig auf die Geräuschentwicklung des Antriebs auswirkt.

Eine kraftschlüssige Verbindung des Stators mit einer Trägerplatte, welche wiederum mit einem Antriebsgehäuse fest verbunden ist, bedingt einen zusätzlichen baulichen Aufwand und erfordert eine sichere Dimensionierung gegen mechanische Überlastung. Darüber hinaus bedeutet die Füllung des Spaltes zwischen der Innenwandung des Stators und der Außenwandung des Lagerschafts mit einem viskosen Medium oder eine Anbringung zusätzlicher flexibler schwingungsdämpfender Elemente zur Überbrückung des Spalts einen erhöhten Fertigungsaufwand und damit vermehrte Kosten bei der Herstellung. Darüber hinaus hat es sich in der Praxis gezeigt, daß weder eine wünschenswerte vollständige mechanische Entkopplung von Stator und Lagerschaft noch eine alternativ wünschenswerte vollständige mechanische Kopplung zwischen Stator und Lagerschaft erreichbar ist, was die Geräuschentwicklung des Antriebs negativ beeinflußt.

Aus der US 4 647 803 ist ein elektromotorischer Antrieb mit einer Motorhalterung bekannt, die einen zylindrischen Zapfen aufweist. Der Antrieb umfaßt ferner einen Antriebswicklungen aufweisenden Stator, welcher von dem zylindrischen Zapfen der Motorhalterung durchgriffen und von diesem gehalten wird. Der zylindrische Zapfen der Motorhalterung weist eine axiale Ausnehmung auf, in der ein zwischen der Innenwandung des Stators und der Außenwandung des zylindrischen Zapfens der Motorhalterung angeordneter Toleranzring aufgenommen ist. Eine Drehmomentübertragung zwischen Stator und Motorhalterung erfolgt über den Toleranzring unter Bildung einer im wesentlichen starren Kopplung zwischen Stator und Motorhalterung. Der Toleranzring, der den Stator mit der Motorhalterung verbindet, besteht aus einer weichen Vergußmasse, um eine Übertragung akustischer Vibrationen zwischen diesen Komponenten zu dämpfen.

Aus der US 5 705 866 ist ein Elektromotor bekannt, bei dem der Stator über ein Verstärkungsteil aus rostfreiem Stahl an einem Lagerschaft montiert ist.

Die US 1 688 891 zeigt einen Elektromotor mit einem zwischen Stator und Motorgehäuse angeordneten Gummiring, dessen Innen- und Außenseite einen wellenförmigen Verlauf aufweisen.

Der Erfindung liegt daher die Aufgabe zugrunde, einen elektromotorischen Antrieb, insbesondere für eine Pumpe für eine elektrohydraulische Fahrzeuglenkvorrichtung, zu schaffen, bei dem eine verbesserte Unterdrückung der bei bekannten Antrieben im Betrieb auftretenden Störgeräusche durch einfache konstruktive Maßnahmen gewährleistet ist.

Diese Aufgabe wird erfindungsgemäß dadurch gelöst einen Antrieb mit den Merkmalen des Anspruchs 1.Erfindungsgemäß wird somit eine Drehmomentübertragung zwischen Stator und Motorhalterung über eine im wesentlichen starre Kopplung realisiert. Ein durch die Fertigungstoleranzen der Bauteile bedingtes eventuell vorhandenes Spiel zwischen der Innenwandung des Stators und der Außenwandung der Motorhalterung wird durch den Toleranzring ausgeglichen und eine konzentrische Lagerung des Stators bezüglich des zylindrischen Zapfens der Motorhalterung gewährleistet. Eine solche konzentrische Lagerung des Stators führt zu reduzierten Störgeräuschen während der Belastungsschwankungen, die im Betrieb des Antriebs in der Regel auftreten. Schwingungen des Systems Stator/Motorhalterung werden verringert. Außerdem wird die Bandbreite der übertragenen Geräusche verringert. Der Stator ist darüber hinaus durch den Toleranzring gegen Bewegung in axialer Richtung entlang des zylindrischen Zapfens der Motorhalterung gesichert. Die Verwendung eines axialen Splints bzw. eines Spiralspannstifts ist erfindungsgemäß nicht notwendig, wodurch auch die Notwendigkeit entfällt, entsprechende Nuten an Stator und Motorhalterung vorzusehen. Ebenso wird kein zusätzliches Halteelement zur axialen Sicherung des Stators benötigt. Aufwendige konstruktive Maßnahmen sind nicht erforderlich. Somit läßt sich der erfindungsgemäße elektromotorische Antrieb insgesamt in vereinfachter Weise und damit auch kostengünstiger herstellen.

Vorteilhafte Ausführungen der Erfindung ergeben sich aus den Unteransprüchen.

Die Erfindung wird nachfolgend anhand von Ausführungsformen näher beschrieben, die in den beigefügten Zeichnungen dargestellt sind. In diesen zeigen:
- Figur 1 in einer axialen Schnittansicht einen erfindungsgemäßen elektromotorischen Antrieb.
- Figur 2 in einer axialen Schnittansicht schematisch den Bereich von Stator und zylindrischem Zapfen einer Motorhalterung eines erfindungsgemäßen elektromotorischen Antriebs.
- Figur 3 in einer Perspektivansicht einen zylindrischen Zapfen einer Motorhalterung mit Toleranzring eines erfindungsgemäßen elektromotorischen Antriebs.

In den Figuren sind jeweils einander entsprechende Elemente mit den gleichen Bezugszeichen versehen.

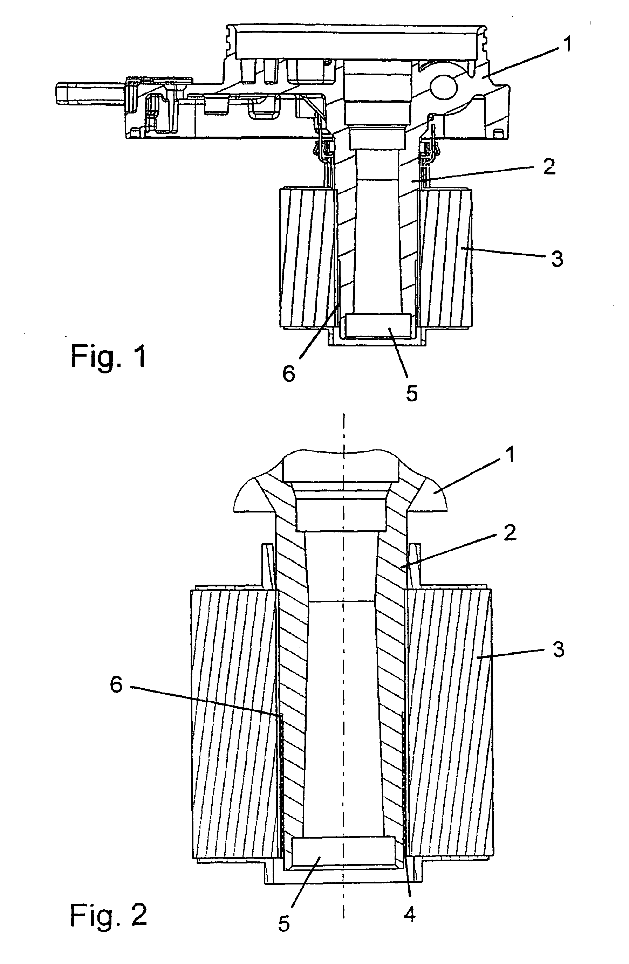

Figur 1 zeigt einen elektromotorischen Antrieb in einer Ausführungsform der Erfindung mit einer Motorhalterung 1, welche einen zylindrischen Zapfen 2 aufweist, und einen auf dem zylindrischen Zapfen 2 aufsitzenden Stator 3. Der zylindrische Zapfen 2 der Motorhalterung 1 ist als hohlzylindrischer Lagerschaft 5 zur drehbaren Lagerung einer Antriebswelle des Antriebs ausgebildet. Ein den Stator 3 topfförmig umfassender Rotor ist in der Figur nicht gezeigt. Der Rotor ist als Außenläufer ausgeführt und wird innerhalb des Gehäuses 1 mittels einer fest mit ihm verbundenen Antriebswelle im Lagerschaft 5 rotierbar gelagert. Die gesamte Anordnung ist von einem in der Figur ebenfalls nicht dargestellten Gehäuse umschlossen.

Um eine bei bekannten Antrieben in der Praxis häufig auftretende störende Geräuschentwicklung, die durch hochfrequente Schwankungen des erzeugten Drehmoments und damit verbundene Schwingungen des Systems Stator/Motorhalterung verursacht wird, zu vermeiden, wird erfindungsgemäß der Stator 3 über einen Toleranzring 4 mit der Motorhalterung 1 kraftschlüssig gekoppelt. Der Toleranzring 4 ist, wie in Figur 2 gezeigt, in einer axialen Ausnehmung 6 am zylindrischen Zapfen 2 der Motorhalterung 1 angeordnet.

Als Material für den Toleranzring 4 findet Kohlenstoffstahl oder rostfreier Federstahl Verwendung.

In einer Ausführungsform der Erfindung weist der hülsenförmig ausgebildete Toleranzring 4 einen wellenförmigen Verlauf entlang des Umfangs seiner Innenwandung auf. Er wird vor der Montage des Stators 3 auf der Motorhalterung 1 in den Stator 3 eingesetzt und fixiert diesen in einem Preßsitz nach erfolgter Montage auf dem zylindrischen Zapfen 2. Die Wellen entlang der Innenwandung des Toleranzrings 4 stützen sich dabei auf der Außenwandung des zylindrischen Zapfens 2 im Bereich der axialen Ausnehmung 6 ab.

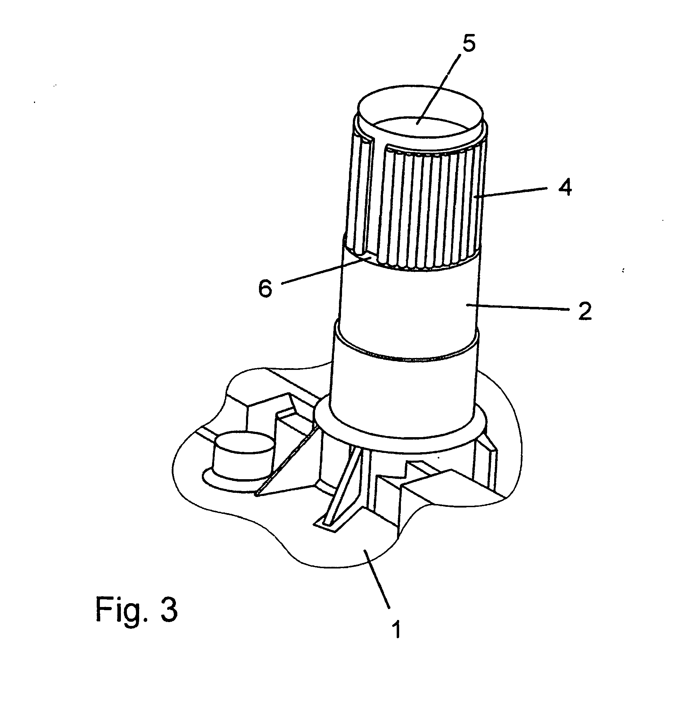

In einer zur im vorherigen Absatz beschriebenen alternativen Ausführungsform der Erfindung weist der hülsenförmig ausgebildete Toleranzring 4 einen wellenförmigen Verlauf entlang des Umfangs seiner Außenwandung auf, wie in Figur 3 gezeigt. Auch auf diese Weise wird bei der Montage ein Preßsitz zwischen Stator 3 und Motorhalterung 1 erreicht. Die Wellen entlang der Außenwandung des Toleranzrings 4 stützen sich dabei auf der Innenwandung des Stators 3 ab.

Ein bei bekannten Motoren vorgesehener Spiralspannstift oder axialer Splint zur kraft- und formschlüssigen Kopplung von Stator 3 und Motorhalterung 1 entfällt bei der erfindungsgemäßen Konstruktion. Durch die erfindungsgemäße Verwendung eines Toleranzrings zur Drehmomentübertragung zwischen Stator 3 und Motorhalterung 1 ergibt sich eine konzentrische Lagerung des Stators 3 bezüglich des zylindrischen Zapfens 2 der Motorhalterung 1 in jedem Betriebszustand des Antriebs und über einen weiten Temperaturbereich von etwa -40°C bis +120°C. Störende geräuscherzeugende Schwingungen des Systems Stator/Motorhalterung werden durch diese konzentrische Lagerung wesentlich verringert.

## Patentansprüche

1. Elektromotorischer Antrieb, insbesondere für eine Pumpe für eine elektrohydraulische Fahrzeuglenkvorrichtung, mit einer Motorhalterung (1), welche einen zylindrischen Zapfen (2) aufweist, und mit einem Antriebswicklungen aufweisenden Stator (3), welcher von dem zylindrischen Zapfen (2) der Motorhalterung (1) durchgriffen und von diesem gehalten wird, wobei der zylindrische Zapfen , (2) der Motorhalterung (1) eine axiale Ausnehmung aufweist, in der ein zwischen der Innenwandung des Stators (3) und der Außenwandung des zylindrischen Zapfens (2) der Motorhalterung (1) angeordneter Toleranzring (4) aus Kohlenstoffstahl oder rostfreiem Federstahl aufgenommen ist, wobei eine Drehmomentübertragung zwischen Stator (3) und Motorhalterung (1) über den Toleranzring (4) unter Bildung einer im wesentlichen starren Kopplung, zwischen Stator (3) und Motorhalterung (1) erfolgt, und wobei der Toleranzring. (4) hülsenförmig mit einem wellenförmigen Verlauf über den Umfang der Innenwandung des Stators (3) oder hülsenförmig mit einem wellenförmigen Verlauf über den Umfang der Außenwandung des zylindrischen Zapfens (2) ausgebildet ist.

2. Elektromotorischer Antrieb nach Anspruch 1, **dadurch gekennzeichnet, daß** der Toleranzring (4) eine konzentrische Lagerung des Stators (3) bezüglich dem zylindrischen Zapfen (2) der Motorhalterung (1) bewirkt.

3. Elektromotorischer Antrieb nach Anspruch 1 oder 2, **dadurch gekennzeichnet, daß** der zylindrische Zapfen (2) der Motorhalterung (1) als hohlzylindrischer Lagerschaft (5) zur drehbaren Lagerung einer Antriebswelle des Antriebs ausgebildet ist.

4. Elektromotorischer Antrieb nach Anspruch 3, **dadurch gekennzeichnet, daß** die Antriebswelle mit einem als Außenläufer ausgebildeten Rotor verbunden ist.

5. Elektromotorischer Antrieb nach einem der vorhergehenden Ansprüche, **dadurch gekennzeichnet, daß** der Stator (3) durch den Toleranzring (4) an dem zylindrischen Zapfen (2) der Motorhalterung (1) in axialer Richtung gesichert ist.

## Claims

1. An electromotive drive, in particular for a pump for an electrohydraulic vehicle steering device, comprising a motor mounting (1) which has a cylindrical pin (2), and a stator (3) which has drive coils and is penetrated by the cylindrical pin (2) of the motor mounting (1) and is held thereby, the cylindrical pin (2) of the motor mounting (1) having an axial recess in which a tolerance ring (4) made of carbon steel or stainless spring steel is received which is arranged between the inner wall of the stator (3) and the outer wall of the cylindrical pin (2) of the motor mounting (1), a torque transmission taking place between the stator (3) and the motor mounting (1) by means of the tolerance ring (4), forming a substantially rigid coupling between the stator (3) and the motor mounting (1), and the tolerance ring (4) being constructed in a sleeve shape with an undulating path over the periphery of the inner wall of the stator (3) or in a sleeve shape with an undulating path over the periphery of the outer wall of the cylindrical pin (2).

2. The electromotive drive according to claim 1, **characterized in that** the tolerance ring (4) effects a concentric bearing of the stator (3) with respect to the cylindrical pin (2) of the motor mounting (1).

3. The electromotive drive according to claim 1 or 2, **characterized in that** the cylindrical pin (2) of the motor mounting (1) is constructed as a hollow cylindrical bearing shaft (5) for the rotatable mounting of a drive shaft of the drive.

4. The electromotive drive according to claim 3, **characterized in that** the drive shaft is connected with a rotor constructed as an outside rotor.

5. The electromotive drive according to any of the preceding claims, **characterized in that** the stator (3) is secured to the cylindrical pin (2) of the motor mounting (1) by the tolerance ring (4) in the axial direction.

## Revendications

1. Entraînement par moteur électrique, en particulier pour une pompe pour un dispositif de direction électrohydraulique de véhicule, comportant un support de moteur (1) qui présente un tenon (2) cylindrique, et comportant un stator (3) présentant des enroulements d'entraînement, qui est traversé et maintenu par le tenon (2) cylindrique du support de moteur (1), le tenon (2) cylindrique du support de moteur (1) présentant un évidement axial dans lequel est reçue une bague de tolérance (4) en acier au carbone ou en acier inoxydable à ressorts, agencée entre la paroi intérieure du stator (3) et la paroi extérieure du tenon (2) cylindrique du support de moteur (1), une transmission d'un couple de rotation entre le stator (3) et le support de moteur (1) étant produite via la bague de tolérance (4) en formant un accouplement sensiblement rigide entre le stator (3) et le support de moteur (1), et la bague de tolérance (4) étant réalisée en forme de douille avec un tracé ondulé sur la périphérie de la paroi intérieure du stator (3) ou en forme de douille avec un tracé ondulé sur la périphérie de la paroi extérieure du tenon (2) cylindrique.

2. Entraînement par moteur électrique selon la revendication 1, **caractérisé en ce que** la bague de tolérance (4) effectue un montage concentrique du stator (3) par rapport au tenon (2) cylindrique du support de moteur (1).

3. Entraînement par moteur électrique selon la revendication 1 ou 2, **caractérisé en ce que** le tenon (2) cylindrique du support de moteur (1) est réalisé sous forme de tige de palier (5) cylindrique creuse pour le montage rotatif d'un arbre moteur de l'entraînement.

4. Entraînement par moteur électrique selon la revendication 3, **caractérisé en ce que** l'arbre moteur est relié à un rotor réalisé sous forme de moteur à induit extérieur.

5. Entraînement par moteur électrique selon l'une des revendications précédentes, **caractérisé en ce que** le stator (3) est assuré par la bague de tolérance (4) en direction axiale sur le tenon (2) cylindrique du support de moteur (1).
